# EUROPÄISCHE PATENTSCHRIFT

(11) **EP 1 318 065 B1**
(45) Veröffentlichungstag und Bekanntmachung des Hinweises auf die Patenterteilung: **07.02.2007**
(21) Anmeldenummer: 02026744.9
(22) Anmeldetag: 01.12.2002
(51) Int. Cl.: B62D 33/06

(54) **Kabine**
Cabin
Cabine

(30) Priorität: 04.12.2001 DE 20119654 U
(43) Veröffentlichungstag der Anmeldung: 11.06.2003
(73) Patentinhaber: Karl Miller GmbH, 77933 Lahr (DE)
(72) Erfinder: Keller, Manfred, 77933 Lahr (DE)
(74) Vertreter: Hutzelmann, Gerhard

(56) Entgegenhaltungen:
- WO-A-02/075061
- GB-A- 2 059 904
- US-A- 1 720 317
- US-A- 2 834 633
- US-A- 5 906 411

## Beschreibung

Die Erfindung bezieht sich auf eine Kabine zur Verwendung bei einem Kran, Bagger od.dgl., mit einem Tragteil und einem Fensterteil, wobei das Tragteil eine Rückwand, je ein Boden- bzw. Deckenteil sowie zwei Seitenwände aufweist, wobei die beiden Seitenwände bogenförmige Ausschnitte aufweisen, die durch seitliche Sichtscheiben verschlossen sind, wobei die seitlichen Sichtscheiben über die Seitenwände auf deren von der Rückwand abgekehrten Ende vorstehen.

Aus der EP-A-1370733 bzw. der WO-A-02/075061 ist eine Kabine zur Verwendung bei einem Kran, Bagger od. dgl., mit einem Tragteil und einem Fensterteil bekannt. Die beiden Seitenwände weisen bogenförmig ausgestaltete Ausschnitte auf, die durch Seitenscheiben verschlossen sind.

Desweiteren ist aus der gattungsgemäßen US-A-2834633 eine Bedienerkabine bekannt, bei der die beiden Seitenwände bogenförmige Ausschnitte aufweisen.

Der Erfindung liegt die Aufgabe zugrunde, eine Kabine der genannten Art so auszugestalten, daß sie vielseitig eingesetzt werden kann und eine möglichst gute Sicht gewährt.

Diese Aufgabe wird erfindungsgemäß dadurch gelöst, daß zwischen der Frontscheibe und wenigstens einem der beiden Boden- und. Deckenteile eine weitere Sichtscheibe angeordnet ist.

Eine derartig ausgebildete Kabine kann sowohl unten an einem Kran als auch oben angebaut werden. In jedem Fall weist sie ein großes Sichtfeld auf. Darüber hinaus ist die Verwendung an einem Bagger problemlos möglich. Auch ist der Einsatz an einem Kombinationgerät, wie z.B. LKW mit Kran oder Bagger realisierbar. Der Sichtbereich ist dadurch stark erweitert, wobei diese weitere Sichtscheibe bei unten am Gerät angeordneter Kabine oben und bei oben am Gerät vorgesehener Kabine unten angebracht ist.

Eine vorteilhafte weitere Ausgestaltung der Erfindung liegt darin, daß die beiden seitlichen Sichtscheiben durch eine bogenförmig ausgebildete Frontscheibe verbunden sind.

Damit ist es möglich den Arbeitsplatz des Bedieners weit nach vorne gegen die Frontscheibe zu plazieren und damit ein nochmals vergrößertes Sichtfeld freizugeben.

Gemäß einer weiteren vorteilhaften Ausgestaltung der Erfindung ist vorgesehen, daß das Bodenteil und das Deckenteil unterschiedlich lang ausgebildet sind.

Das kürzere der beiden Teile wird immer zum Sichtbereich hin angeordnet werden, wozu die Kabine einfach um 180° gedreht wird. Das bedeutet, daß die beiden Teile je nach Montageort der Kabine wahlweise das Bodenteil oder das Deckenteil bilden.

Als sehr vorteilhaft hat es sich ergeben, wenn gemäß einer weiteren Ausgestaltung der Erfindung im Innern der Kabine eine Sitzeinrichtung sowie eine Bedieneinrichtung vorgesehen sind, die entsprechend der jeweiligen Verwendungslage der Kabine zum kürzeren oder zum längeren Boden- bzw. Deckenteil ausgerichtet sind.

Durch einfaches Umsetzen oder Schwenken der beiden Einrichtungen kann die Kabine jeweils optimal unten oder oben an einem Kran od.dgl. angeordnet werden.

Eine weitere vorteilhafte Ausgestaltung der Erfindung ist dadurch gekennzeichnet, daß Sitz- und Bedieneinrichtung so in der Kabine angeordnet sind, daß das kürzere der beiden Boden- bzw. Deckenteile unten liegt.

Damit ist eine optimale Anordnung der Kabine im oberen Bereich des Gerätes ermöglicht.

Sehr vorteilhaft ist jedoch auch eine andere Ausgestaltung der Erfindung, gemäß welcher Sitz- und Bedieneinrichtung so in der Kabine angeordnet sind, daß das kürzere der beiden Boden- bzw. Deckenteile oben liegt.

Das ergibt bei Anordnung der Kabine im unteren Bereich des Gerätes ein sehr gutes Sichtfeld.

Als sehr vorteilhaft hat sich eine weitere Ausgestaltung der Erfindung ergeben, die dadurch gekennzeichnet ist, daß das Deckenteil ein Verlängerungsteil (Dachteil) aufweist.

Damit wird insbesondere bei Anordnung der Kabine im oberen Bereich des Gerätes ein guter Blendschutz gegen Sonneneinstrahlung erzielt.

Gemäß einer vorteilhaften Ausgestaltung der Erfindung ist vorgesehen, daß die Sichtscheibe unter dem Dachteil angeordnet und durch das Dachteil lediglich abgedeckt ist.

In der Zeichnung ist die Erfindung anhand von zwei Ausführungsbeispielen veranschaulicht. Dabei zeigen:
- Fig. 1: eine schematische Darstellung einer Kabine, mit Rückwand, zwei Seitenwänden, Boden und Deckenteil sowie einer Frontscheibe und Sichtscheiben zwischen den Seitenwänden und der Frontscheibe und mit einem Sichteinsatz zwischen dem Bodenteil und der Frontscheibe,
- Fig.2: eine ebenfalls schematische Darstellung der Kabine nach Fig. 1 jedoch um 180° gedreht, sodaß der Sichteinsatz nunmehr zwischen Frontscheibe und Deckenteil angeordnet ist,
- Fig.3: eine Anordnung der Kabine entsprechend Fig. 1 jedoch mit nach hinten vergrößertem Innenraum, wodurch Platz für Einbauaggregate und eventuell eine zweite Person geschaffen ist.

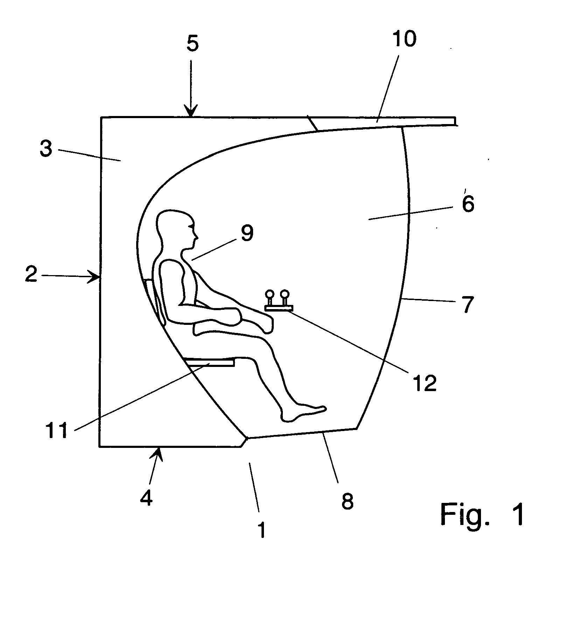

Mit 1 ist in Fig. 1 eine Kabine bezeichnet, die eine nicht weiter gezeigte Rückwand 2, zwei spiegelbildlich zueinander ausgebildete Seitenwände 3, ein Bodenteil 4 und ein Deckenteil 5 als tragende Elemente aufweist. Die beiden Seitenwände 3 sind an ihrer von der Rückwand abgekehrten Seite bogenförmig ausgeschnitten, wobei der am weitesten zur Rückwand 2 reichende Ausschnitt im oberen Bereich der Seitenwände 3 liegt. Diese Ausschnitte sind durch Sichtscheiben 6 aus Glas oder glasähnlichem Material verschlossen, wobei die Sichtscheiben 6 über die Seitenwände 3 sowie das Bodenteil 4 und das Deckenteil 5 vorstehen. An der von der Rückwand 2 abgewandten Seite sind die beiden seitlichen Sichtscheiben 6 über eine Frontscheibe 7 miteinander verbunden. Diese Frontscheibe 7 ist von oben nach unten gewölbt ausgebildet und endet entsprechend den beiden Sichtscheiben 6 vor dem Bodenteil 4 und vor dem Deckenteil 5. In die Abstandsfläche zwischen der Frontscheibe 7 und dem Bodenteil 4 ist eine weitere Sichtscheibe 8 eingesetzt, wodurch der Kranführer 9 freie Sicht nach vorne, den Seiten und unten hat. Zwischen der Frontscheibe 7 und dem Deckenteil 5 ist dagegen ein Dachteil 10 eingesetzt, das noch über die Frontscheibe 7 vorsteht, wodurch ein Blendschutz gegen Sonneneinstrahlung von oben erzielt wird.

Die in Fig. 1 dargestellte Kabine 1 eignet sich sehr gut zum Anbringen im oberen Bereich eines nicht dargestellten Kranes, da dabei hervorragende Sichtverhältnisse für den Kranführer bestehen.

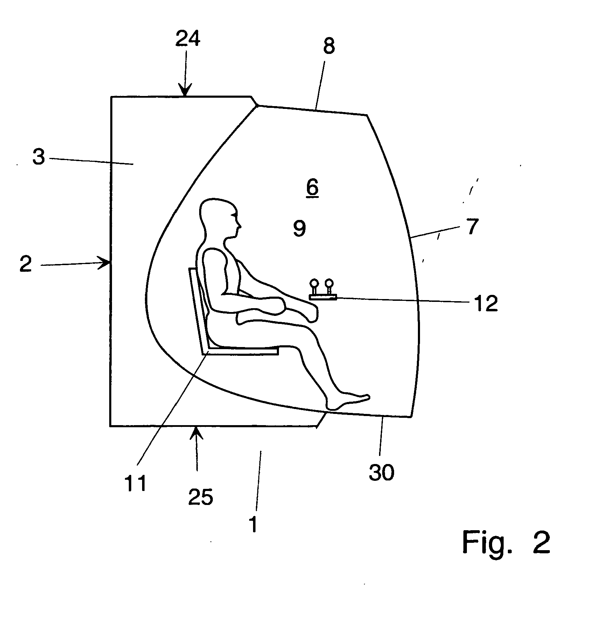

Soll eine derartige Kabine dagegen im unteren Bereich eines Kranes oder eines Baggers angebracht werden, so sind keine äußeren Veränderungen der Kabine notwendig. Die Kabine wird wie in Fig.2 dargestellt lediglich um 180° geschwenkt, so daß das Teil 5 nunmehr als Bodenteil 25 fungiert, während das Teil 4 das Deckenteil 24 bildet. Das Dachteil 10 ist weggelassen und durch ein Sichtfenster 30 ersetzt, so daß auch nach unten zumindest beschränkte Sicht besteht. Die seitlichen Sichtscheiben 6, die Frontscheibe 7 und die Sichtscheibe 8 ergeben hierbei eine hervorragen Sicht nach allen benötigten Seiten. Bei dieser Ausgestaltung muß lediglich die Sitzgelegenheit 11 für den Kranführer und die Bedieneinheit 12 ebenfalls um 180° geschwenkt werden.

Das Sichtfenster 30 kann auch beim Ausführungsbeispiel nach Fig. 1 vorhanden und dort lediglich durch das Dachteil 10 abgedeckt sein.

Damit läßt sich ein und dieselbe Krankabine ohne große Veränderungen für unterschiedliche Einsatzzwecke verwenden.

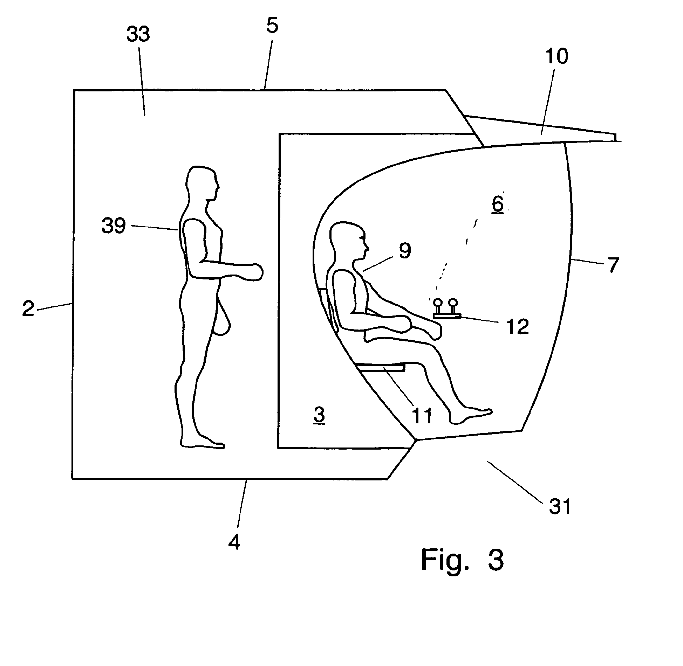

Die Fig.3 zeigt ein Ausführungsbeispiel einer Kabine 31, das weitgehend der Anordnung nach Fig. entspricht. Lediglich die beiden Seitenwände 3 sind durch Ansatzwände 33 nach hinten verlängert und Bodenteil und Deckenteil sind ebenfalls nach hinten ergänzt, wobei zumindest das Bodenteil verstärkt ausgebildet ist. Dadurch ist Platz für weitere Einbauaggregate und eventuell auch für eine zweite Bedienungsperson geschaffen.

Diese vergrößerte Ausgestaltung einer Kabine 31 kann ebenso wie die kleinere Ausgestaltung um 180° gedreht angeordnet werden, womit auch diese größere Kabine beliebig an einem Kran oder einem Bagger angeordnet werden kann.

## Patentansprüche

1. Kabine (1,31) zur Verwendung bei einem Kran, Bagger od.dgl., mit einem Tragteil und einem Fensterteil, wobei das Tragteil eine Rückwand (2), je ein Boden- bzw. Deckenteil (4,5;24,25) sowie zwei Seitenwände (3) aufweist, wobeidie beiden Seitenwände (3) bogenförmige Ausschnitte aufweisen, die durch seitliche Sichtscheiben (6) verschlossen sind, wobei die seitlichen Sichtscheiben (6) über die Seitenwände (3) auf dem von der Rückwand (2) abgekehrtem Ende der Seitenwände (3) vorstehen, **dadurch gekennzeichnet, daß** zwischen der Frontscheibe (7) und wenigstens einem der beiden Boden- und Deckenteile (4,5;24,25) eine weitere Sichtscheibe (8) angeordnet ist.

2. Kabine nach Anspruch 1, **dadurch gekennzeichnet, daß** die beiden seitlichen Sichtscheiben (6) durch eine bogenförmig ausgebildete Frontscheibe (7) verbunden sind.

3. Kabine nach einem der vorhergehenden Ansprüche, **dadurch gekennzeichnet, daß** das Bodenteil (4,25) und das Deckenteil (5,24) unterschiedlich lang ausgebildet sind.

4. Kabine nach einem der vorhergehenden Ansprüche, **dadurch gekennzeichnet, daß** im Innern der Kabine (1,31) eine Sitzeinrichtung (11) sowie eine Bedieneinrichtung (12) vorgesehen sind.

5. Kabine nach Anspruch 4, **dadurch gekennzeichnet, daß** Sitz- und Bedieneinrichtung (11,12) so in der Kabine (1,31) angeordnet sind, daß das kürzere der beiden Boden- bzw. Deckenteile (4,5;24,25) unten liegt.

6. Kabine nach Anspruch 4, **dadurch gekennzeichnet, daß** Sitz- und Bedieneinrichtung (11,12) so in der Kabine (1,319 angeordnet sind, daß das kürzere der beiden Boden- bzw. Deckenteile (4,5;24,25) oben liegt.

7. Kabine nach einem der vorhergehenden Ansprüche, **dadurch gekennzeichnet, daß** das Deckenteil (5) ein Verlängerungsteil (Dachteil 10) aufweist.

8. Kabine nach einem der vorhergehenden Ansprüche, **dadurch gekennzeichnet, daß** bei Verwendung des Deckenteils (5) als Bodenteil (25) anstelle des Verlängerungsteils eine weitere Sichtscheibe (30) vorgesehen ist.

9. Kabine nach einem der Ansprüche 1 bis 7, **dadurch gekennzeichnet, daß** das Verlängerungsteil (Dachteil 10) über eine weitere Sichtscheibe (30) gelegt ist und diese abdeckt.

## Claims

1. Cabin (1, 31) for use in a crane, excavator etc., with a support section and a window section, where the support section has a back wall (2), a base section and a top section (4, 5; 24, 25) and two side walls (3), where the two side walls (3) have curved cut-outs that are closed by side windows (6), where the side windows (6) project beyond the side walls (3) at the opposite end of the side walls (3) from the back wall (2), wherein another window (8) is provided between the front window (7) and at least one of the two base and top sections (4, 5; 24, 25).

2. Cabin according to claim 1, wherein the two side windows (6) are connected by a curved front window (7).

3. Cabin according to one of the previous claims, wherein the base section (4, 25) and the top section (5, 24) have different lengths.

4. Cabin according to one of the previous claims, **wherein** a seat unit (11) and a control unit (12) are provided inside the cabin (1, 31).

5. Cabin according to claim 4, wherein the seat and control unit (11, 12) are located in the cabin (1. 31) in such a way that the shorter of the two base and top sections (4, 5; 24, 25) is below.

6. Cabin according to claim 4, wherein the seat and control unit (11,12) are located in the cabin (1, 31) in such a way that the shorter of the two base and top sections (4, 5; 24, 25) is above.

7. Cabin according to one of the previous claims, wherein the top section (5) has an extension section (roof section 10).

8. Cabin according to one of the previous claims, wherein another window (30) is provided instead of the extension section, when the top section (5) is used as the base section (25).

9. Cabin according to one of claims 1 to 7, wherein the extension section (roof section 10) is positioned above another window (30) and covers it.

## Revendications

1. Cabine (1, 31) à utiliser pour une grue, un excavateur ou analogue, avec au moins un élément porteur et un élément de fenêtre, sachant que l'élément porteur présente une paroi arrière (2), un élément respectif de plancher et de fond (4, 5 ; 24, 25) ainsi que deux parois latérales (3), sachant que les deux parois latérales (3) présentent des découpures arquées qui sont fermées par des vitres latérales (6), sachant que les vitres latérales (6) dépassent des parois latérales (3) à l'extrémité des parois latérales (3) qui est opposée à la paroi arrière (2), **caractérisée en ce qu'**une vitre supplémentaire (8) est disposée entre la vitre avant (7) et au moins un des deux éléments de plancher et de plafond (4, 5 ; 24, 25).

2. Cabine selon la revendication 1, **caractérisée en ce que** les deux vitres latérales (6) sont reliées par une vitre avant (7) réalisée arquée.

3. Cabine selon l'une des revendications précédentes, **caractérisée en ce que** l'élément de plancher (4, 25) et l'élément de plafond (5, 24) sont réalisés de longueurs différentes.

4. Cabine selon l'une des revendications précédentes, **caractérisée en ce qu'**un siège (11) ainsi qu'un dispositif de commande (12) sont prévus à l'intérieur de la cabine (1, 31).

5. Cabine selon la revendication 4, **caractérisée en ce que** le siège et le dispositif de commande (11, 12) sont disposés dans la cabine (1, 3 1) de telle sorte que le plus court des deux éléments de plancher et de plafond (4, 5 ; 24, 25) se trouve en bas.

6. Cabine selon la revendication 4, **caractérisée en ce que** le siège et le dispositif de commande (11, 12) sont disposés dans la cabine (1, 31) de telle sorte que le plus court des deux éléments de plancher et de plafond (4, 5 ; 24, 25) se trouve en haut.

7. Cabine selon l'une des revendications précédentes, **caractérisée en ce que** l'élément de plafond (5) présente un élément de prolongement (élément de toit 10).

8. Cabine selon l'une des revendications précédentes, **caractérisée en ce que**, en cas d'utilisation de l'élément de plafond (5) comme élément de plancher (25), une vitre supplémentaire (30) est prévue à la place de l'élément de prolongement.

9. Cabine selon l'une des revendications 1 à 7, **caractérisée en ce que** l'élément de prolongement (élément de toit 10) est posé au-dessus d'une vitre supplémentaire (30) et recouvre celle-ci.
